# EUROPÄISCHE PATENTSCHRIFT

(11) **EP 3 580 844 B1**
(45) Veröffentlichungstag und Bekanntmachung des Hinweises auf die Patenterteilung: **21.07.2021**
(21) Anmeldenummer: 18708324.1
(22) Anmeldetag: 06.02.2018
(51) Int. Cl.: H02N 2/00, H02N 2/02

(54) **PIEZOMOTOR**
PIEZO MOTOR
MOTEUR PIÉZOÉLECTRIQUE

(30) Priorität: 10.02.2017 DE 102017102663
(43) Veröffentlichungstag der Anmeldung: 18.12.2019
(73) Patentinhaber: Physik Instrumente (PI) GmbH & Co. KG, 76228 Karlsruhe (DE)
(72) Erfinder: ROSENKRANZ, Mathias, 76593 Gernsbach (DE)
(74) Vertreter: Grünecker Patent- und Rechtsanwälte PartG mbB
(86) Internationale Anmeldenummer: PCT/DE2018/100099
(87) Internationale Veröffentlichungsnummer: WO 2018/145697

(56) Entgegenhaltungen:
- EP-A1- 2 200 101
- WO-A2-2013/034146

## Beschreibung

Die Erfindung betrifft einen Piezomotor mit den im Oberbegriff des Patentanspruchs 1 angegebenen Merkmalen.

Ein solcher Motor mit piezoelektrischem Antrieb ist beispielsweise aus der WO 2013/034146 A2 bekannt. Kern des Motors ist ein Aktor in Form eines flachen rechteckigen Quaders aus piezoelektrischer Keramik. An den beiden gegenüberliegenden Hauptflächen des Piezoaktors sind Elektroden angeordnet. Durch Anlegen einer definierten elektrischen Spannung bzw. einer Erregerspannung an den Elektroden kommt es zu gezielten periodischen Deformationen des Piezoaktors mit einer bestimmten Frequenz. Da die Frequenz dieser periodischen Deformationen im Ultraschallbereich liegt, werden solche Piezomotoren auch als Ultraschallmotoren bezeichnet. Die periodischen Deformationen des Piezoaktors übertragen sich auf ein an einer langen Seitenfläche des Piezoaktors angeordnetes Friktionselement, so dass das vordere Ende des Friktionselements einer definierten Bewegungsbahn folgt. Besagte Bewegungsbahn ist dergestalt, dass das Friktionselement, welches gegen ein anzutreibendes Element gedrückt ist, eine Kraft auf dieses in der gewünschten Antriebsrichtung ausübt und dieses somit entlang der Antriebsrichtung bewegt. Wird die Erregerspannung umgepolt, treibt der Piezoaktor das anzutreibende Element in die entgegengesetzte Richtung an.

Bei dem vorbekannten Piezomotor ist der quaderförmige Piezoaktor in einen rechteckigen Rahmen eingespannt, der aus zwei im Querschnitt L-förmigen Rahmenteilen zusammengesetzt ist. Dieser Rahmen umschließt den Piezoaktor nahezu vollständig, und nur die Seitenfläche, an welcher das Friktionselement angeordnet ist, ist nicht von dem Rahmen umschlossen. Die beiden Rahmenteile werden von einer kräftigen Federklammer zusammengehalten und so gegen den Piezoaktor gedrückt, dass dieser spielfrei in dem Rahmen gehalten ist.

Der vorbekannte Piezomotor hat ferner ein zweiteiliges Gehäuse bestehend aus einem im Querschnitt U-förmigen Gehäuseunterteil und einem flachen Gehäusedeckel mit Federabschnitten. Der Rahmen ist verschieblich in dem Gehäuse gelagert, und zwar derart, dass sich dieser zusammen mit dem darin angeordneten Piezoaktor nahezu ungehindert in Richtung des anzutreibenden Elements (x-Richtung) bewegen kann, während eine unerwünschte Bewegung in Querrichtung (y-Richtung) oder nach oben bzw. unten (z-Richtung) unterbunden wird. Hierzu sind Führungsnuten zwischen der Innenseite des Gehäuseunterteils und der Unterseite des Rahmens sowie zwischen der Oberseite des Rahmens und dem Gehäusedeckel angeordnet. Diese Führungsnuten erstrecken sich parallel zu den Stirnseiten des Piezoaktors bzw. rechtwinklig zu dessen langer Seitenfläche, auf der das Friktionselement sitzt. In den Führungsnuten sitzen jeweils Lagerelemente, die bei dem in WO 2013/034146 A beschriebenen Ausführungsbeispiel als zylindrische Gleitstifte ausgebildet sind. Federelastische Abschnitte des Gehäusedeckels üben Druck auf die Gleitstifte aus, so dass der Rahmen mit dem Piezoaktor präzise in dem Gehäuse gelagert ist. Zwei Spiralfedern drücken den Rahmen mit dem Piezoaktor und damit das Friktionselement in Richtung des anzutreibenden Elements, das die Form eines geraden Stabs hat. Die durch Anschlagelemente begrenzte Verschieblichkeit des Piezoaktors in Richtung des Friktionselements, das heißt quer zu dem anzutreibenden Element, dient dem Ausgleich von Toleranzen, die sowohl fertigungsbedingt, als auch durch Verschleiß des Friktionselements bzw. der Friktionsfläche des anzutreibenden Elements Teile entstehen können.

Die Präzision des Motors und sein Wirkungsgrad hängen entscheidend davon ab, dass die über das Friktionselement in den Piezoaktor eingeleiteten Gegenkräfte nicht zu einer unerwünschten Verlagerung des Piezoaktors führen. Entsprechend steif muss die Lagerung ausgeführt sein.

Bei der Konstruktion gemäß WO 2013/034146 A2 stützt sich der Piezoaktor gegen die Seitenwände des rechteckigen Rahmens ab, und die eingeleiteten Momente werden über den Rahmen auf die zwischen Boden und Deckel angeordneten Lagerelemente in das Gehäuse eingeleitet. Entsprechend stabil muss der Rahmen und die den Rahmen zusammenhaltende Federklammer ausgeführt werden. Auch müssen die V-förmigen Ausnehmungen, welche die Lagerelemente aufnehmen und parallel führen, präzise und stabil ausgeführt sein, damit unerwünschte Bewegungen des Piezoaktors insbesondere in seitlicher Richtung, das heißt parallel zur Vortriebsrichtung des anzutreibenden Elements, wirksam unterbunden werden. Ein weiterer Nachteil besteht darin, dass die Konstruktion nicht wenige und teilweise aufwendig herzustellende Einzelteile umfasst und der Zusammenbau entsprechend aufwendig ist. Schließlich führt diese Konstruktionsweise zu einer Bauhöhe, die über die Dicke des Piezoaktors erheblich hinausgeht.

Somit liegt der Erfindung das technische Problem zugrunde, einen weiter verbesserten hochpräzisen Piezomotor mit bestmöglichem Wirkungsgrad bereitzustellen, der aus wenigen und einfach herzustellenden Einzelteilen besteht, einfach zusammenbaubar ist und sich durch eine geringe Bauhöhe auszeichnet.

Bei der Lösung dieser Aufgabe wird ausgegangen von einem Piezomotor gemäß dem Oberbegriff des ersten Patentanspruchs. Gelöst wird die Aufgabe durch die im kennzeichnenden Teil des ersten Patentanspruchs angegebenen Merkmale.

Der erfindungsgemäße Piezomotor umfasst eine Halterung mit zwei zueinander beabstandet angeordneten Klemmbacken, die einen Piezoaktor zwischen sich einspannen und diesen in einem Gehäuse lagern. In dem Gehäuse sind - im Falle eines quaderförmigen Piezoaktors - beidseits der Stirnflächen bzw. - im Falle eines hohlzylinderförmigen Piezoaktors - beidseits der radial nach außen weisenden Umfangsfläche ebene Führungsbahnen angeordnet, die sich parallel zur Richtung der gewünschten Bewegung des Piezoaktors, d.h. im Wesentlichen senkrecht zu der Antriebsrichtung des anzutreibenden Elements, im Gehäuse erstrecken. Zwischen diesen Führungsbahnen und den Außenseiten der Klemmbacken sind im Querschnitt kreisförmige Lagerelemente angeordnet. Zwischen den Lagerelementen und federelastischen Abschnitten des Gehäuses sitzen spezielle Druckstücke, welche mit den ebenen Führungsbahnen im Gehäuse gemeinsam jeweils Führungen in der Art von V-förmigen Nuten bilden. Unter dem Druck der federelastischen Abschnitte des Gehäuses pressen die Druckstücke die Lagerelemente gegen die Klemmbacken, und gleichzeitig werden die Lagerelemente in den durch die Druckstücke und die zugeordneten Führungsbahnen gebildeten V-förmigen Nuten gelagert und zentriert.

Der zuvor und im Folgenden an weiteren Stellen verwendete Begriff ,im Wesentlichen' in Zusammenhang mit geometrischen Formen soll durchgängig zum Ausdruck bringen, dass die damit gekennzeichnete geometrische Form als solche zweifelsfrei zu erkennen ist, aber eben nicht vollständig, sondern größtenteils damit übereinstimmt. Wird der Begriff ,im Wesentlichen' in Zusammenhang mit Zahlenwerten oder Richtungsangaben verwendet, so wird damit eine maximale Abweichung von 5% von dem entsprechenden Zahlenwert bzw. der entsprechenden Richtungsangabe beschrieben.

Bei der erfindungsgemäßen Konstruktion werden die im Wesentlichen parallel zu den langen bzw. ebenen Seitenflächen des Piezoaktors wirkenden Kräfte auf die seitlich zu diesem angeordneten Klemmbacken übertragen und von diesen auf die Lagerelemente und über die Druckstücke in das Gehäuse eingeleitet. Da alle wesentlichen Bauteile, welche Kräfte aufnehmen müssen, im Wesentlichen in derselben Achse liegen, gibt es - neben dem Gehäuse selbst - kein Zwischenteil, das auf Biegung beansprucht wird. Toleranzen, seien es fertigungsbedingte Maßungenauigkeiten oder alterungs- oder temperaturbedingte Maßabweichungen, werden aufgrund des federelastischen Zusammenpressens aller für die Präzision der Lagerung maßgeblichen Teile automatisch ausgeglichen.

Ein weiterer großer Vorteil der Erfindung besteht darin, dass der ganze Motor aus nur wenigen Einzelheiten besteht. Die für die Präzision und Leichtgängigkeit der Halterung des Piezoaktors maßgeblichen Teile, also Klemmbacken, Lagerelemente und Druckstücke, werden einfach in das Gehäuse eingesetzt und gelangen automatisch bzw. selbständig beim Zusammensetzen des Piezomotors in ihre korrekte Lage. Auf Passungen, Klemm- oder Rastverbindungen oder gar zusätzliche Verbindungsmittel, wie zum Beispiel Klammern, kann ebenso verzichtet werden wie auf Klebungen oder andere Fügetechniken. Dadurch, dass die Lagerelemente an den Stirnseiten bzw. an den äußeren Umfangsflächen des Piezoaktors sitzen und der Piezoaktor größtenteils freischwebend zwischen den Klemmbacken gehaltert wird, bestimmt im Wesentlichen nur die Dicke bzw. der Durchmesser des Piezoaktors die erforderliche Bauhöhe des Motors.

Die Lagerelemente sollen die Reibung zwischen dem Gehäuse und den Klemmbacken reduzieren und können deshalb aus einem speziellen Kunststoff mit optimierten tribologischen Eigenschaften bestehen. Im Prinzip können die Lagerelemente fast jede beliebige Form haben, und zum Beispiel als Gleitstifte mit rechteckigem oder prismatischem Querschnitt ausgebildet sein.

Es kann vorteilhaft sein, dass wenigstens eines der Druckstücke einen Fasenabschnitt aufweist. Zudem kann es vorteilhaft sein, dass wenigstens eines der Druckstücke im Querschnitt im Wesentlichen eine Dreiecksform aufweist. Hierdurch kann auf einfache Weise mit der Fasenfläche bzw. mit der entsprechenden Seitenfläche des im Querschnitt im Wesentlichen dreiecksförmigen Druckstücks und der jeweils zugeordneten Führungsbahn Führungen in Art einer V-förmige Nut ausgebildet werden.

In vorteilhafter und zweckmäßiger Ausbildung der Erfindung sind in den Außenseiten der Klemmbacken Führungsnuten ausgebildet. Die im Querschnitt kreisförmigen Lagerelemente sitzen zwischen den durch die Druckstücke und die zugeordneten ebenen Führungsbahnen gemeinschaftlich gebildeten V-Führungen und den korrespondierenden Führungsnuten. Bei dieser Konstruktion definieren die Führungen bzw. Führungsnuten die Position des Piezoaktors in dem Gehäuse, insbesondere die Abstände zu den Innenseiten des Gehäuses. Die beiden Klemmbacken, die den Piezoaktor zwischen sich einspannen, bilden eine Art Schlitten, der an den Innenseiten der die U-Schenkel bildenden Seitenwände des Gehäuses beweglich gelagert ist. Dabei stützen sich die in Art eines Keils wirkenden Druckstücke gegen das Gehäuse ab und drücken die Lagerelemente in die an den Außenseiten der Klemmbacken angeordneten Führungsnuten, wobei sich die Lagerelemente aufgrund ihres kreisförmigen Querschnitts selbst in den V-förmigen Führungen bzw. Führungsnuten zentrieren.

Zwei zylindrische Lagerelemente, je eines pro Klemmbacke, würden genügen, um den Piezoaktor präzise in der Mitte des Gehäuses zu lagern und gleichzeitig eine ungehinderte Beweglichkeit in x-Richtung, d.h. in Richtung auf das anzutreibende Element zu bzw. im Wesentlichen senkrecht zu der Antriebsrichtung des anzutreibenden Elements, zu gewährleisten. Bevorzugt werden jedoch Lagerelemente in Kugelform, wobei der Einsatz von zwei kugelförmigen Lagerelementen pro Klemmbacke zweckmäßig ist.

In weiterer, vorteilhafter und zweckmäßiger Ausbildung der Erfindung sind in den Außenseiten der Klemmbacken jeweils zwei kurze Führungsnuten eingearbeitet, die jeweils ein kugelförmiges Lagerelement aufnehmen. Die Länge der Führungsnuten begrenzt dabei den Rollweg der Kugeln, so dass diese sich nicht gegenseitig verklemmen können. Die seitliche Lagerung mittels zwei identisch ausgebildeter Lagerelemente gewährleistet eine exakte Parallelführung der Klemmbacken im Gehäuse. Kugelförmige Lagerelemente haben gegenüber zylindrischen Lagerstiften den Vorteil, dass sie in den Führungsnuten rollen, also Wälzlager darstellen, die im Vergleich zu Gleitlagern gegen Verschmutzung unempfindlicher sind.

Die Klemmbacken haben vorteilhaft an ihren zueinander weisenden Innenseiten Zentrierflächen, an denen sich der Piezoaktor in einem Linienkontakt abstützt. Dadurch zentriert sich der Piezoaktor selbst, so dass er optimiert und vorzugsweise exakt horizontal im Gehäuse ausgerichtet ist. Die vorzugsweise schrägen Zentrierflächen bilden dabei Stützen oder Auflager und halten den Piezoaktor in definiertem Abstand parallel zwischen Boden und Deckel des Gehäuses. Der linienförmige Kontakt zwischen Klemmbacken und Piezoaktor behindert die Schwingfähigkeit des Aktors nur minimal, so dass diese Art der Lagerung einen maximalen Wirkungsgrad des Motors gewährleistet.

Bei einer weiteren vorteilhaften Ausführung des erfindungsgemäßen Piezomotors haben die Klemmbacken einen Grundriss, der im Prinzip einem großen L entspricht. Die so geformten Klemmbacken umgreifen nicht nur die schmalen Stirnseiten bzw. die äußere Umfangsfläche des Piezoaktors, sondern erstrecken sich zudem ein Stück weit parallel zu der ebenen Seitenfläche des Piezoaktors, welche der Seitenfläche, an welcher das Friktionselement angeordnet ist, gegenüberliegt. Zweckmäßig sind die Klemmbacken als Gleichteile ausgeführt, die allein aufgrund ihrer spiegelbildlichen Anordnung die rechte oder linke Klemmbacke bilden.

Vorteilhaft sitzt die wenigstens eine Feder zwischen den Klemmbacken und der hinteren Seitenwand des Gehäuses. Vorzugsweise sitzt zwischen jeder Klemmbacke und dem Gehäuse jeweils eine Feder, die vorzugsweise als Schraubenfeder ausgebildet ist. Diese Federn drücken beide Klemmbacken und über diese den Piezoaktor in Richtung des anzutreibenden Elements, um unabhängig von eventuellen Fertigungstoleranzen und alterungsbedingter Abnutzung einen stets gleichbleibenden Anpressdruck des Friktionselements an die Oberfläche des anzutreibenden Elements zu gewährleisten.

Bei einer besonders bevorzugten Ausführungsform ist das Gehäuse zweiteilig ausgeführt und umfasst ein nach zwei Seiten hin offenes Gehäuseunterteil und einen aufsetzbaren Gehäusedeckel. In zusammengesetztem Zustand verschließt der Gehäusedeckel eine der offenen Seiten des Gehäuseunterteils. Der Gehäusedeckel weist federelastische Abschnitte auf.

Vorteilhaft weist das Gehäuseunterteil Halteabschnitte auf, die mit entsprechenden Öffnungen in den Klemmbacken zusammenwirken. Dies dient zur Begrenzung der Bewegung des Piezoaktors entlang der gewünschten Bewegungsrichtung im Wesentlichen senkrecht zu der Antriebsrichtung des anzutreibenden Elements.

Ein derart ausgebildeter Piezomotor kann sehr einfach und schnell zusammengebaut werden, indem die im Patentanspruch 13 aufgezählten Herstellungsschritte durchgeführt werden.

Ausführungsbeispiele der Erfindung werden nachstehend anhand der beigefügten Zeichnungen beschrieben. Es zeigen:
Figur 1: einen Piezomotor mit einem rechteckförmigen Piezoaktor in perspektivischer Ansicht von vorne;
Figur 2: den Piezomotor von Figur 1 mit anzutreibendem Element;
Figur 3: die Einzelteile des Piezomotors von Figur 1 in einer perspektivischen Explosionsdarstellung;
Figur 4a: den Piezomotor von Figur 1 in einer Vorderansicht;
Figur 4b: den Piezomotor von Figur 1 in Draufsicht;
Figur 5a: den Piezomotor von Figur 1, geschnitten entlang der Linie A-A in Figur 4b;
Figur 5b: einen Horizontalschnitt entlang der Linie A-A in Figur 4b
Figur 6: einen Piezomotor mit einem hohlzylindrischen Piezoaktor in perspektivischer Ansicht;
Figur 7: den Piezomotor von Figur 6 in einer perspektivischen Explosionsdarstellung
Figur 8a: den Piezomotor von Figur 6 in einer Vorderansicht;
Figur 8b: den Piezomotor von Figur 6 in Draufsicht;

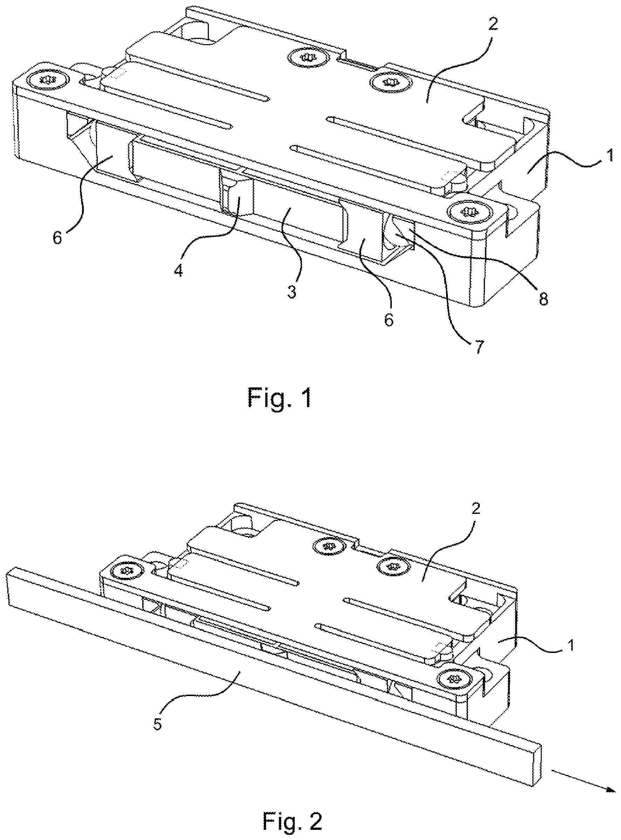

Der in Figur 1 und 2 dargestellte Piezomotor hat ein im Prinzip rechteckiges Gehäuse umfassend ein Gehäuseunterteil 1, das wannenartig mit im Prinzip U-förmigem Querschnitt ausgebildet ist, und einen flachen ebenen Gehäusedeckel 2. Der Gehäusedeckel 2 ist mittels vier Senkkopfschrauben auf dem Gehäuseunterteil 1 befestigt.

Die Vorderseite des Gehäuses ist weitgehend offen, so dass in Figur 1 der in dem Gehäuse eingesetzte Piezoaktor 3 gut zu sehen ist. Der Piezoaktor 3 hat die Form eines flachen rechteckigen Quaders und trägt an seiner dem Betrachter zugewandten Vorderseite bzw. an dessen langer Seitenfläche ein Friktionselement 4.

Wie aus Figur 2 ersichtlich, weist das Friktionselement 4 in Richtung eines anzutreibenden Elements 5, das hier die Form eines Stabs mit rechteckigem Querschnitt hat und sich quer zum Friktionselement 4 erstreckt. Der Piezoaktor 3 wird zu Schwingungen mit einer Frequenz im Ultraschallbereich angeregt, wodurch die Spitze des Friktionselements 4 in eine oszillierende Bewegung versetzt wird, welche im Endeffekt zu einer lateralen Bewegung (in Richtung des in Figur 2 gezeigten Pfeils) des anzutreibenden Elements 5 führt.

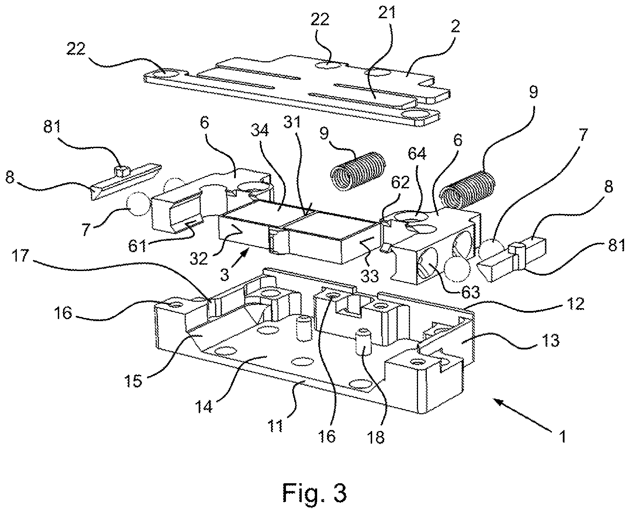

In der perspektivischen Explosionsdarstellung gemäß Figur 3 sind die Einzelteile, aus denen der Piezomotor besteht, gut zu erkennen.

Das Gehäuseunterteil 1 hat einen im Wesentlichen rechteckigen Grundriss und ist im Querschnitt U-förmig ausgebildet. Es hat einen flachen Boden 11, eine geschlossene Rückwand 12 und zwei Seitenwände 13, welche die U-Schenkel bilden. Nahezu die gesamte Vorderseite wird von einer breiten Aussparung eingenommen. An den Übergängen zwischen dem Boden 11 und den Seitenwänden 13 sind ebene Führungsbahnen 15 ausgebildet, die gegenüber dem Boden 11 unter einem schrägen Winkel von im Wesentlichen 45 Grad stehen. Im Bereich der vorderen Ecken bzw. im Bereich der Rückwand 12 sind insgesamt vier Gewindebohrungen 16 eingearbeitet. Ungefähr in der Mitte des Gehäuseunterteils 1 erstrecken sich ausgehend von dem Boden 11 zwei zapfenartige Halteabschnitt 18 in vertikaler Richtung nach oben.

Der Gehäusedeckel 2 ist flach und eben. Parallele Schlitze begrenzen zwei schmale federnde Abschnitte 21, die sich von der Symmetrieachse in der Mitte ausgehend nach rechts und links erstrecken. Der Gehäusedeckel 2 hat vier Befestigungslöcher 22, die mit den Gewindebohrungen 16 fluchten.

Der Piezoaktor 3 hat die Form eines flachen rechteckigen Quaders mit zwei einander gegenüberliegenden Hauptflächen 31 und insgesamt vier ebenen Seitenflächen. Zwei der Seitenflächen sind lange Seitenflächen 32, und zwei der Seitenflächen sind kurze und Stirnflächen 33 bildende Seitenflächen. In der Mitte der nach vorne weisenden langen Seitenfläche 32 ist das Friktionselement 4 aufgeklebt. Auf der nach oben weisenden Hauptfläche 31 sitzen zwei näherungsweise quadratische Erregerelektroden 34. Die gemeinsame Gegenelektrode auf der gegenüberliegenden Hauptfläche ist hier nicht sichtbar.

Die beiden Klemmbacken 6 haben einen Grundriss, der im Wesentlichen der Form eines großen L entspricht, wobei die langen L-Schenkel im Wesentlichen parallel zu den Stirnflächen 33 des Piezoaktors 3 und die kurzen L-Schenkel im Wesentlichen parallel zu der hinteren langen Seitenfläche 32 verlaufen. Die Klemmbacken 6 haben an ihren aufeinander zu weisenden bzw. in Richtung auf die Stirnflächen 33 des Piezoaktors 3 zu weisenden Innenseiten jeweils kurze Zentrierflächen 61, welche auf einem gedachten V angeordnet sind. Zwischen den Zentrierflächen 61 sind die Innenseiten der Klemmbacken 6 eben ausgebildet.

Die Klemmbacken 6 sind etwas höher als der Piezoaktor 3. An den parallel zur hinteren langen Seitenfläche 32 des Piezoaktors 3 verlaufenden L-Schenkeln tragen die Klemmbacken 6 kleine schräge Stütznasen 62, die V-förmig zueinander angeordnete Halteflächen bilden.

An den Außenseiten der Klemmbacken 6 befinden sich jeweils zwei kurze Führungsnuten 63. Diese Führungsnuten 63 dienen der Aufnahme von kugelförmigen Lagerelementen 7, die in den Führungsnuten 63 ein kleines Stück hin- und her rollen können. Die Führungsnuten 63 sind an ihren jeweiligen vorderen und hinteren Enden wie Kegelstümpfe geformt, korrespondierend zu der Kugelform der Lagerelemente 7, die (nach dem Zusammenbau) in diesen Führungsnuten 63 sitzen.

Die Klemmbacken 6 haben jeweils eine durchgehende Öffnung 64, in welche die Halteabschnitte 18 des Gehäuseunterteils 1 eingreifen. Dadurch ist die Bewegung der Klemmbacken 6 und damit des eingespannten Piezoaktors 3 entlang der Bewegungsrichtung begrenzt.

In der Explosionsdarstellung von Figur 3 sind ferner zwei spiegelbildlich angeordnete Druckstücke 8 erkennbar, welche stabförmig ausgebildet sind und im Wesentlichen parallel zu den Außenseiten der Klemmbacken 6 bzw. den Stirnflächen 33 des Piezoaktors 3 ausgerichtet sind. Die Druckstücke 8 haben im Wesentlichen einen Querschnitt in Form eines rechtwinkligen Dreiecks, wobei die entsprechenden Hypotenusen in Richtung auf die Klemmbacken 6 zu weisen. Etwa in der Mitte eines jeden Druckstücks 8 ist ein kurzer Vorsprungsabschnitt 81 angeformt, welcher einen halbrunden Querschnitt hat und jeweils mit einer ebenfalls halbrund geformten Aussparung 17 an der jeweiligen Seitenwand des Gehäuseunterteils 1 korrespondiert.

Die Vorsprungsabschnitte 81 der Druckstücke 8 wirken mit dem Gehäuse derart zusammen, dass das Druckstück 8 gegen eine Verschiebung in einer zur Bewegungsrichtung des Piezoaktors 3 parallelen Richtung gesichert ist und das Druckstück 8 mit einer definierten Kraft zwischen dem Gehäuse und den Lagerelementen 7 eingespannt ist.

Beide Klemmbacken 6 sind identisch ausgebildet, jedoch spiegelbildlich angeordnet. Ebenso sind die beiden Druckstücke 8 Gleichteile. Auch die insgesamt vier Kugeln, welche die Lagerelemente 7 bilden, sind identisch ausgebildet.

Zwei gleiche Federn 9, die hier als zylindrische Schraubenfedern ausgebildet sind, komplettieren die Liste der Einzelteile des Piezomotors. Die Federn 9 sind in zusammengesetztem Zustand des Piezomotors zwischen der Rückwand 12 des Gehäuseunterteils 1 und den Klemmbacken 6 unter Vorspannung eingesetzt und bewirken eine Kraft auf die Klemmbacken in einer Richtung auf die geöffnete Vorderseite des Gehäuses zu, so dass auch der Piezoaktor 3 in einer Richtung auf die geöffnete Vorderseite des Gehäuses zu gedrückt ist, wodurch das Friktionselement 4 mit einer definierten Kraft gegen das anzutreibende Element 5 gedrückt ist. Die aus der Druckkraft der Federn 9 resultierende Bewegung bzw. Verschiebung der Klemmbacken 6 und damit des Piezoaktors 3 ist hierbei stark eingeschränkt und definiert durch das Spiel der Halteabschnitte 18 in den zugeordneten Öffnungen 64, wobei der Durchmesser der Halteabschnitte 18 in entsprechender Weise geringer ist als der Durchmesser der Öffnungen 64.

Beim Zusammenbau des Piezomotors mit einem flachen, rechteckförmigen Piezoaktor werden die zwei Klemmbacken 6 an die Stirnflächen 33 des Piezoaktors 3 angelegt und anschließend nach unten in das Gehäuseunterteil 1 eingesetzt. Anschließend werden die insgesamt vier kugelförmigen Lagerelemente 7 in die entsprechenden Führungsnuten 63 der Klemmbacken 6 eingesetzt. Es folgt die Montage der Federn 9. Zum Schluss werden die beiden Druckstücke 8 eingelegt und der Gehäusedeckel 2 aufgeschraubt.

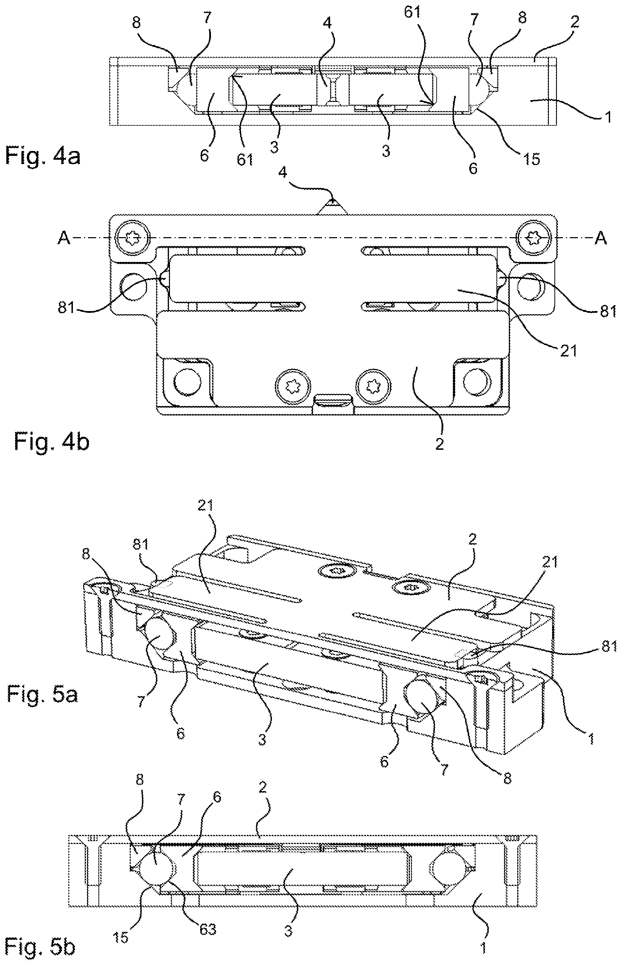

Insbesondere die Vorderansicht von Figur 4a sowie der Schnitt in Figur 5a lassen erkennen, wie der Piezoaktor 3 zwischen den Klemmbacken 6 eingespannt ist und die Klemmbacken 6 ihrerseits mittels der kugelförmigen Lagerelemente 7 derart im Gehäuse gelagert sind, dass sich der Piezoaktor ausschließlich in Richtung des anzutreibenden Elements (x-Richtung) etwas bewegen kann, nicht aber rechtwinklig dazu, also in y-Richtung bzw. in z-Richtung.

Wie insbesondere aus Figur 5a ersichtlich, bilden die im Querschnitt im Wesentlichen dreiecksförmigen Druckstücke 8 zusammen mit den schräg angeordneten Führungsbahnen 15 des Gehäuseunterteils 1 zwei parallele Führungen in der Art von V-förmigen Führungsnuten, welche die kugelförmigen Lagerelemente 7 etwa zur Hälfte aufnehmen. Die jeweils andere Kugelhälfte wird von den korrespondierenden Führungsnuten 63 an den Klemmbacken 6 aufgenommen. Die bei der Montage nur lose eingelegten Druckstücke 8 werden nach Montage bzw. Befestigung des Gehäusedeckels 2 an dem Gehäuseunterteil 1 von den federnden Abschnitten 21 des Gehäusedeckels 2 gegen die kugelförmigen Lagerelemente 7 gedrückt. Die Lagerelemente 7 geben diesen Druck weiter auf die Klemmbacken 6. Aufgrund ihres in der Zeichenebene kreisförmigen Querschnitts (vgl. Figur 5b) zentrieren sich die Lagerelemente 7 von selbst in den Führungsnuten 69 und den gegenüberliegenden Führungen, gebildet aus Druckstück 8 und Führungsbahn 15.

Die Kanten zwischen den Stirnflächen 33 und den Hauptflächen 31 des Piezoaktors 3 haben nur Linienkontakt mit den V-förmig angeordneten Zentrierflächen 61 der Klemmbacken 6. Dadurch zentriert sich auch der Piezoaktor 3 selbst, so dass er im Wesentichen parallel und in definierter Höhenlage zwischen dem Boden des Gehäuseunterteils 1 und dem Gehäusedeckel 2 sitzt. Dabei hat der Piezoaktor 3 nur linienförmigen Kontakt mit den Klemmbacken 6. Somit kann der Piezoaktor 3 weitgehend ungehindert schwingen.

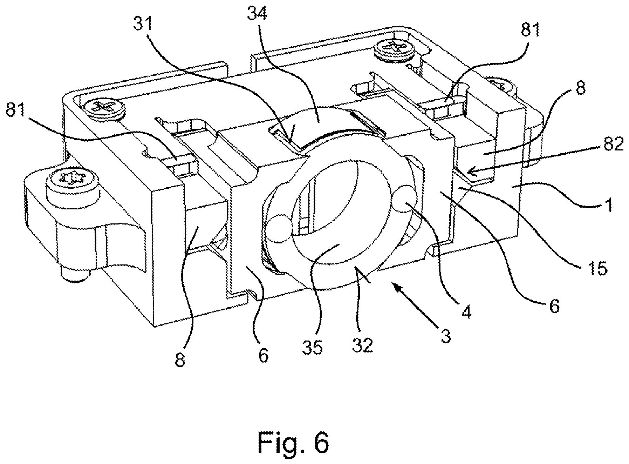

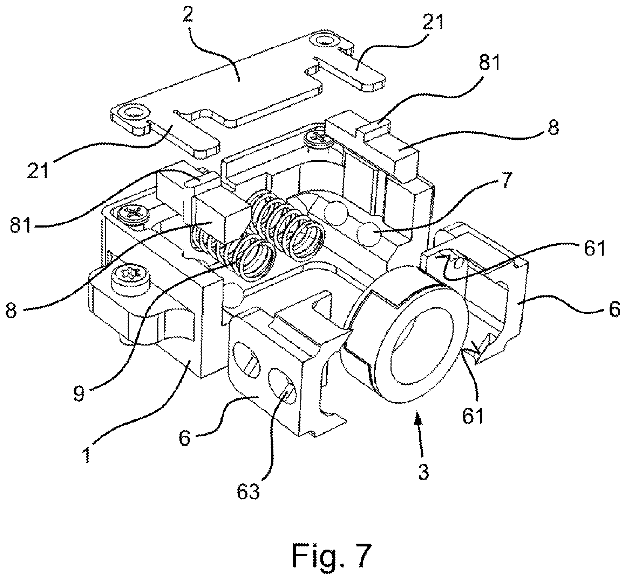

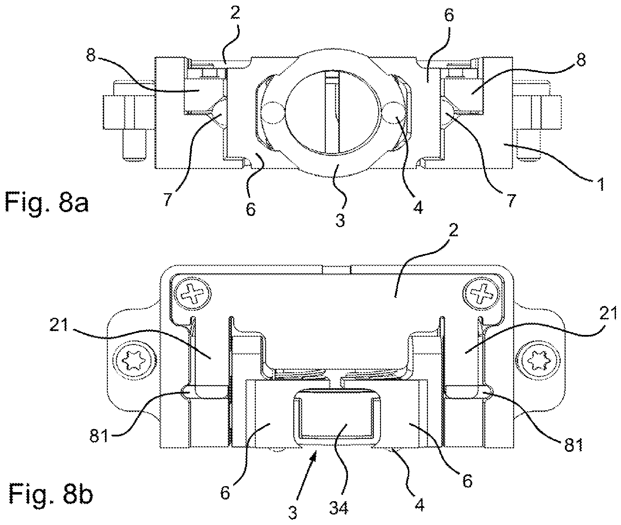

Die Figuren 6 bis 8b zeigen eine weitere Ausführungsform eines erfindungsgemäßen Piezomotors, der im Gegensatz zu dem in den Figuren 1 bis 5b gezeigten Piezomotor einen Piezoaktor mit einer hohlzylindrischen Form aufweist, aber ansonsten weitgehend identisch zu dem in den Figuren 1 bis 5b gezeigten Piezomotor ist, weshalb im Folgenden lediglich auf die bestehenden Unterschiede eingegangen wird.

Der hohlzylindrische Piezoaktor 3 weist an seiner radial nach außen weisenden Umfangsfläche, welche eine Hauptfläche 31 des Piezoaktors 3 darstellt, mehrere voneinander beabstandete und im Wesentlichen rechteckförmige Erregerelektroden 34 auf. An der radial nach innen weisenden Umfangsfläche, welche ebenso eine Hauptfläche 31 des Piezoaktors 3 darstellt, ist eine die Hauptfläche 31 im Wesentlichen vollständig bedeckende gemeinsame Gegenelektrode 35 angeordnet.

An der dem Betrachter von Figur 6 zugewandten ebenen Seitenfläche 32 sind zwei diametral gegenüberliegende Friktionselemente 4 in Form von Kugelabschnitten bzw. Halbkugeln angeordnet.

Die Klemmbacken 6 sind so geformt, dass lediglich die entlang des Umfangs verlaufenden Außenkanten des hohlzylinderförmigen Piezoaktors 3 damit in Kontakt kommen. Dazu weisen auch hier die Klemmbacken 6 Zentrierflächen 61 auf, die sowohl an den dem Betrachter zugewandten, als auch an den dem Betrachter abgewandten Enden der Klemmbacken 6 vorgesehen sind.

Jedes der Druckstücke 8 hat im Querschnitt eine im Wesentlichen quadratische Form, wobei eine Kante mit einer Fase versehen ist und das Druckstück somit einen Fasenabschnitt 82 aufweist, der zusammen mit der Schrägfläche der Führungsbahn 15 eine im Wesentlichen V-förmige Führungsnut bildet.

Beim Zusammenbau des Piezomotors mit einem hohlzylinderförmigen Piezoaktor werden die zwei Klemmbacken 6 an diametral gegenüberliegenden Abschnitten der radial nach außen weisenden Außenumfangsfläche des Piezoaktors 3 angelegt und anschließend nach unten in das Gehäuseunterteil 1 eingesetzt. Anschließend werden die insgesamt vier kugelförmigen Lagerelemente 7 in die entsprechenden Führungsnuten 63 der Klemmbacken 6 eingesetzt. Es folgt die Montage der Federn 9. Zum Schluss werden die beiden Druckstücke 8 eingelegt und der Gehäusedeckel 2 aufgeschraubt.

### Bezugszeichen

- 1: Gehäuseunterteil
- 2: Gehäusedeckel
- 3: Piezoaktor
- 4: Friktionselement
- 5: Anzutreibendes Element
- 6: Klemmbacke
- 7: Lagerelement
- 8: Druckstück
- 9: Feder
- 11: Boden (von 1)
- 12: Rückwand
- 13: Seitenwand
- 14: Aussparung
- 15: Führungsbahn
- 16: Gewindebohrung
- 17: Ausnehmung
- 18: Halteabschnitt
- 21: Federelastischer Abschnitt (von 2)
- 22: Befestigungslöcher
- 31: Hauptfläche (von 3)
- 32: Seitenfläche
- 33: Stirnfläche
- 34: Erregerelektrode
- 35: Gemeinsame Gegenelektrode
- 61: Zentrierfläche (von 6)
- 62: Stütznase
- 63: Führungsnut
- 64: Öffnung
- 81: Vorsprungsabschnitt (von 8)
- 82: Fasenabschnitt (von 8)

## Patentansprüche

1. Piezomotor, mit
einem zumindest eine Öffnung aufweisenden Gehäuse, welches federelastische Abschnitte (21) umfasst;
einem in einer Antriebsrichtung anzutreibenden Element (5);
einem in dem Gehäuse eingesetzten Piezoaktor (3) mit einem an einer seiner ebenen Seitenflächen (32) angeordneten Friktionselement (4), wobei zumindest das Friktionselement (4) aus der Öffnung des Gehäuses hinausragt und zu einem Kontakt mit dem anzutreibenden Element (5) vorgesehen ist;
einer Halterung, die zwei voneinander beabstandete Klemmbacken (6) umfasst, welche den Piezoaktor (3) zwischen sich einspannen und diesen in dem Gehäuse derart lagern, dass sich der Piezoaktor (3) ausschließlich in einer Richtung auf das anzutreibende Element (5) zu bewegen kann, welche im Wesentlichen senkrecht zu der Antriebsrichtung ausgerichtet ist und eine Bewegungsrichtung des Piezoaktors (3) definiert;
wenigstens einer Feder (9), die den Piezoaktor (3) gegen das anzutreibende Element (5) drückt;
in dem Gehäuse zumindest abschnittsweise angeordneten ebenen Führungsbahnen (15), welche sich parallel zu der Bewegungsrichtung des Piezoaktors (3) erstrecken;
zwischen den Klemmbacken (6) und den Führungsbahnen (15) angeordneten Lagerelementen (7) mit einem kreisförmigen Querschnitt;
**dadurch gekennzeichnet, dass** zwischen den federelastischen Abschnitten (21) des Gehäuses und den Lagerelementen (7) Druckstücke (8) eingespannt sind, welche zusammen mit den Führungsbahnen (15) des Gehäuses Führungen in Art einer V-Nut bilden, und durch die Druckstücke (8) die Lagerelemente (7) gegen die Klemmbacken (6) gedrückt sind.

2. Piezomotor nach Anspruch 1, **dadurch gekennzeichnet, dass** wenigstens eines der Druckstücke (8) einen Fasenabschnitt (82) aufweist.

3. Piezomotor nach Anspruch 1, **dadurch gekennzeichnet, dass** wenigstens eines der Druckstücke (8) im Querschnitt im Wesentlichen eine Dreiecksform aufweist.

4. Piezomotor nach einem der vorhergehenden Ansprüche, **dadurch gekennzeichnet, dass** jedes der Druckstücke (8) einen Vorsprungsabschnitt (81) besitzt, der mit dem Gehäuse derart zusammenwirkt, dass das Druckstück (8) gegen eine Verschiebung in einer zu der Bewegungsrichtung des Piezoaktors (3) parallelen Richtung gesichert ist und dass jedes der Druckstücke (8) mit einer definierten Kraft zwischen dem Gehäuse und den Lagerelementen (7) eingespannt ist.

5. Piezomotor nach einem der vorhergehenden Ansprüche, **dadurch gekennzeichnet, dass** in jeder der Klemmbacken (6) wenigstens eine Führungsnut (63) für die Lagerelemente (7) vorgesehen sind.

6. Piezomotor nach Anspruch 5, **dadurch gekennzeichnet, dass** zwischen jeder der beiden Klemmbacken (6) und dem Gehäuse jeweils zwei kugelförmige Lagerelemente (7) sitzen, wobei für jedes kugelförmige Lagerelement (7) eine ihm eigene Führungsnut (63) in den Klemmbacken (6) vorgesehen ist.

7. Piezomotor nach einem der vorhergehenden Ansprüche, **dadurch gekennzeichnet, dass** die Klemmbacken (6) an ihren zueinander weisenden Innenseiten Zentrierflächen (61) aufweisen, an denen sich der Piezoaktor (3) in einem Linienkontakt abstützt.

8. Piezomotor nach einem der vorhergehenden Ansprüche, **dadurch gekennzeichnet, dass** jede der Klemmbacken (6) im Wesentlichen L-förmig ausgebildet ist und jeweils eine Ecke des Piezoaktors (3) umgreift.

9. Piezomotor nach einem der vorhergehenden Ansprüche, **dadurch gekennzeichnet, dass** die Klemmbacken (6) identisch ausgebildet sind.

10. Piezomotor nach einem der vorhergehenden Ansprüche, **dadurch gekennzeichnet, dass** die wenigstens eine Feder (9) zwischen den Klemmbacken (6) und einer Seitenwand des Gehäuses angeordnet ist.

11. Piezomotor nach einem der vorhergehenden Ansprüche, **dadurch gekennzeichnet, dass** das Gehäuse zweiteilig ist, mit einem nach zwei Seiten offenen Gehäuseunterteil (1) und einem die federelastischen Abschnitte (21) aufweisenden Gehäusedeckel (2), wobei in zusammengesetztem Zustand der Gehäusedeckel (2) eine der offenen Seiten des Gehäuseunterteils (1) verschließt.

12. Piezomotor nach Anspruch 11, **dadurch gekennzeichnet, dass** das Gehäuseunterteil (1) Halteabschnitte (18) zur Begrenzung der Bewegung des Piezoaktors (3) entlang der Bewegungsrichtung aufweist, die mit entsprechenden Öffnungen (64) in den Klemmbacken (6) zusammenwirken.

13. Verfahren zur Herstellung eines Piezomotors nach Anspruch 12, umfassend folgende Herstellungsschritte:
Einsetzen des Piezoaktors (3) zwischen den Klemmbacken (6) der Halterung;
Anordnen der Feder (9) in dem Gehäuse;
Einsetzen der Halterung mit dem darin gehalterten Piezoaktor (3) in das Gehäuse derart, dass die Halteabschnitte (18) in die Öffnungen (64) der Halterung eingreifen unter gleichzeitiger Spannung der zwischen dem Gehäuse und der Halterung angeordneten Feder (9), wobei aufgrund des Eingreifens der Halteabschnitte (18) in die Öffnungen (64) der Halterung eine Bewegung des Piezoaktors (3) entlang der Bewegungsrichtung begrenzt ist;
Einsetzen der Lagerelemente (7) zwischen den Klemmbacken (6) und dem Gehäuse;
Einsetzen der Druckstücke (8) zwischen dem Gehäuseunterteil (1) und der jeweils zugeordneten Klemmbacke (6) an einer der zugehörigen Führungsbahn (15) gegenüberliegenden Position, so dass der jeweilige Vorsprungsabschnitt (81) in Eingriff mit einer korrespondierenden Aussparung (14) des Gehäuses gerät;
Aufsetzen und Befestigen des Gehäusedeckels (2) auf das Gehäuseunterteil (1) derart, dass die Vorsprungsabschnitte (81) gegen die zugeordneten federelastischen Abschnitte (21) des Gehäusedeckels (2) drücken und diese elastisch verbiegen, um dadurch eine entsprechende Druckkraft auf die Druckstücke (8) in Richtung auf die jeweils zugeordnete Führungsbahn (15) zu auszuüben, so dass, abgesehen von dem anzutreibenden Element (5) und der Feder (9), alle einzelnen Teile des Piezomotors gegeneinander verspannt sind.

## Claims

1. Piezo motor, comprising
a housing having at least one opening, which comprises spring-elastic sections (21);
an element (5) to be driven in a driving direction;
a piezo actuator (3) inserted in the housing and having a friction element (4) arranged on one of its planar side faces (32), at least the friction element (4) projecting out of the opening of the housing and being provided for contact with the element (5) to be driven;
a holder comprising two spaced-apart clamping jaws (6) which clamp the piezo actuator (3) between them and support it in the housing in such a way that the piezo actuator (3) can move exclusively in a direction towards the element (5) to be driven which is oriented substantially perpendicular to the driving direction and defines a direction of movement of the piezo actuator (3);
at least one spring (9) which presses the piezo actuator (3) against the element (5) to be driven;
planar guide tracks (15) which are arranged at least in sections in the housing and extend parallel to the direction of movement of the piezo actuator (3); bearing elements (7) arranged between the clamping jaws (6) and the guide tracks (15) and having a circular cross-section;
**characterized in that** thrust pieces (8) are clamped between the spring-elastic sections (21) of the housing and the bearing elements (7), which together with the guide tracks (15) of the housing form guides in the manner of a V-groove, and the bearing elements (7) are pressed against the clamping jaws (6) by the thrust pieces (8).

2. Piezo motor according to claim 1, **characterized in that** at least one of the thrust pieces (8) has a chamfer section (82).

3. Piezo motor according to claim 1, **characterized in that** at least one of the thrust pieces (8) has a substantially triangular cross-section.

4. Piezo motor according to one of the preceding claims, **characterized in that** each of the thrust pieces (8) has a projection section (81) which cooperates with the housing in such a way that the thrust piece (8) is secured against displacement in a direction parallel to the direction of movement of the piezo actuator (3), and **in that** each of the thrust pieces (8) is clamped with a defined force between the housing and the bearing elements (7).

5. Piezo motor according to one of the preceding claims, **characterized in that** at least one guide groove (63) for the bearing elements (7) is provided in each of the clamping jaws (6).

6. Piezo motor according to claim 5, **characterized in that** between each of the two clamping jaws (6) and the housing two spherical bearing elements (7) are arranged, wherein for each spherical bearing element a guide groove (63) of its own is provided in the clamping jaws (6).

7. Piezo motor according to one of the preceding claims, **characterized in that** the clamping jaws (6) have centering surfaces (61) on their mutually facing inner sides, on which the piezo actuator (3) is supported in a line contact.

8. Piezo motor according to one of the preceding claims, **characterized in that** each of the clamping jaws (6) is substantially L-shaped and each grips around a corner of the piezo actuator (3).

9. Piezo motor according to one of the preceding claims, **characterized in that** the clamping jaws (6) are of identical design.

10. Piezo motor according to one of the preceding claims, **characterized in that** the at least one spring (9) is arranged between the clamping jaws (6) and a side wall of the housing.

11. Piezo motor according to one of the preceding claims, **characterized in that** the housing consists of two parts, having a lower housing part (1) which is open on two sides and a housing cover (2) which has the spring-elastic sections (21), the housing cover (2) closing one of the open sides of the lower housing part (1) in the assembled state.

12. Piezo motor according to Claim 11, **characterized in that** the housing lower part (1) has retaining sections (18) for limiting the movement of the piezo actuator (3) along the direction of movement, which cooperate with corresponding openings (64) in the clamping jaws (6).

13. Method of manufacturing a piezo motor according to claim 12, comprising the following manufacturing steps:
inserting the piezo actuator (3) between the clamping jaws (6) of the holder;
arranging the spring (9) in the housing;
inserting the holder with the piezo actuator (3) held therein into the housing in such a way that the retaining sections (18) engage in the openings (64) of the holder while simultaneously tensioning the spring (9) arranged between the housing and the holder, a movement of the piezo actuator (3) along the direction of movement being limited due to the engagement of the retaining sections (18) in the openings (64) of the holder;
inserting the bearing elements (7) between the clamping jaws (6) and the housing;
inserting the thrust pieces (8) between the housing lower part (1) and the respectively associated clamping jaw (6) at a position opposite the associated guide track (15), so that the respective projection section (81) comes into engagement with a corresponding recess (14) of the housing;
placing and fixing the housing cover (2) on the housing lower part (1) in such a way that the projection sections (81) press against the associated spring elastic sections (21) of the housing cover (2) and elastically bend them, thereby exerting a corresponding compressive force on the thrust pieces (8) in the direction of the respective associated guide track (15), so that, apart from the element (5) to be driven and the spring (9), all the individual parts of the piezo motor are tensioned against one another.

## Revendications

1. Moteur piézoélectrique, avec
un carter présentant au moins un orifice et comprenant des parties élastiques (21) ; un élément (5) à entraîner dans une direction d'entraînement ;
un actionneur piézoélectrique (3) inséré dans le carter avec un élément de friction (4) agencé sur l'une de ses surfaces latérales (32) planes, dans lequel au moins l'élément de friction (4) fait saillie hors de l'orifice du carter et est prévu pour venir en contact avec l'élément à entraîner (5) ;
un dispositif de retenue comprenant deux mâchoires de serrage (6) espacées l'une de l'autre et qui serrent l'actionneur piézoélectrique (3) entre elles et le maintiennent dans le carter de telle manière que l'actionneur piézoélectrique (3) ne peut se déplacer vers l'élément à entraîner (5) qu'exclusivement dans une direction orientée de manière essentiellement perpendiculaire à la direction d'entraînement et définissant une direction de mouvement de l'actionneur piézoélectrique (3) ;
au moins un ressort (9) pressant l'actionneur piézo-électrique (3) contre l'élément à entraîner (5) ;
des pistes de guidage (15) planes agencées au moins par sections dans le carter et qui s'étendent parallèlement à la direction de déplacement de l'actionneur piézoélectrique (3) ;
des éléments formant roulement (7) agencés entre les mâchoires de serrage (6) et les pistes de guidage (15) et présentant une section circulaire ;
**caractérisé en ce que** des pièces de pression (8) qui, avec les pistes de guidage (15) du carter, forment des guides à la manière d'une rainure en V, sont serrées entre les sections élastiques (21) du carter et les éléments formant roulement (7), et les éléments formant roulement (7) sont pressés contre les mâchoires de serrage (6) grâce aux pièces de pression (8).

2. Moteur piézoélectrique selon la revendication 1, **caractérisé en ce qu'**au moins une des pièces de pression (8) présente un section à chanfrein (82).

3. Moteur piézoélectrique selon la revendication 1, **caractérisé en ce qu'**au moins une des pièces de pression (8) présente une section transversale essentiellement triangulaire.

4. Moteur piézoélectrique selon l'une quelconque des revendications précédentes, **caractérisé en ce que** chacune des pièces de pression (8) présente une partie saillante (81) qui coopère avec le carter de telle manière que la pièce de pression (8) est protégée contre un déplacement dans une direction parallèle à la direction de déplacement de l'actionneur piézoélectrique (3), et **en ce que** chacune des pièces de pression (8) est serrée entre le carter et les éléments formant roulement (7) avec une force définie.

5. Moteur piézoélectrique selon l'une quelconque des revendications précédentes, **caractérisé en ce qu'**au moins une rainure de guidage (63) destinée aux éléments formant roulement (7) est prévue dans chacune des mâchoires de serrage (6).

6. Moteur piézoélectrique selon la revendication 5, **caractérisé en ce que** deux éléments formant roulement (7) sphériques sont logés respectivement entre chacune des deux mâchoires de serrage (6) et le carter, dans lequel une rainure de guidage (63) spécifique à chaque élément formant roulement (7) sphérique est prévue dans les mâchoires de serrage (6).

7. Moteur piézo-électrique selon l'une quelconque des revendications précédentes, **caractérisé en ce que** les mâchoires de serrage (6) présentent sur leurs faces intérieures tournées l'une vers l'autre des surfaces de centrage (61) sur lesquelles l'actionneur piézoélectrique (3) s'appuie selon un contact linéaire.

8. Moteur piézo-électrique selon l'une quelconque des revendications précédentes, **caractérisé en ce que** chacune des mâchoires de serrage (6) est réalisée essentiellement en forme de L et enserre respectivement un coin de l'actionneur piézo-électrique (3).

9. Moteur piézoélectrique selon l'une quelconque des revendications précédentes, **caractérisé en ce que** les mâchoires de serrage (6) sont réalisées de manière identique.

10. Moteur piézoélectrique selon l'une quelconque des revendications précédentes, **caractérisé en ce que** le au moins un ressort (9) est agencé entre les mâchoires de serrage (6) et une paroi latérale du carter.

11. Moteur piézoélectrique selon l'une quelconque des revendications précédentes, **caractérisé en ce que** le carter est en deux parties, avec une partie inférieure de carter (1) ouverte sur les deux côtés et un couvercle de carter (2) présentant les sections élastiques (21), dans lequel le couvercle de carter (2) ferme l'un des côtés ouverts de la partie inférieure de carter (1) à l'état assemblé.

12. Moteur piézoélectrique selon la revendication 11, **caractérisé en ce que** la partie inférieure de carter (1) présente des sections de retenue (18) qui permettent de limiter le déplacement de l'actionneur piézoélectrique (3) le long de la direction de déplacement et coopèrent avec des orifices (64) correspondants des mâchoires de serrage (6).

13. Procédé de fabrication d'un moteur piézoélectrique selon la revendication 12, comprenant les étapes de fabrication ci-dessous consistant à :
insérer l'actionneur piézoélectrique (3) entre les mâchoires de serrage (6) du dispositif de retenue ;
agencer le ressort (9) dans le carter ;
insérer le dispositif de retenue, avec l'actionneur piézoélectrique (3) retenu dedans, dans le carter de telle manière que les sections de retenue (18) viennent en prise dans les orifices (64) du dispositif de retenue avec un serrage simultané du ressort (9) agencé entre le carter et le dispositif de retenue, dans lequel un mouvement de l'actionneur piézoélectrique (3) le long de la direction de mouvement est limité en raison de la mise en prise des sections de retenue (18) dans les orifices (64) du dispositif de retenue ;
insérer les éléments formant roulement (7) entre les mâchoires de serrage (6) et le carter ;
insérer les pièces de pression (8) entre la partie inférieure de carter (1) et la mâchoire de serrage (6) respectivement associée au niveau d'une position opposée à la piste de guidage (15) associée de sorte que la partie saillante (81) respective vient en prise avec un évidement (14) correspondant du carter ;
poser et fixer le couvercle de carter (2) sur la partie inférieure de carter (1) de telle manière que les parties saillantes (81) appuient contre les parties élastiques (21) associées du couvercle de carter (2) et les plient de manière élastique afin d'exercer ainsi une force de compression correspondante sur les pièces de pression (8) en direction de la piste de guidage (15) respectivement associée, de sorte que, à l'exception de l'élément à entraîner (5) et du ressort (9), toutes les parties individuelles du moteur piézoélectrique sont serrées les unes contre les autres.
